# EUROPÄISCHE PATENTSCHRIFT

(11) **EP 0 638 452 B1**
(45) Veröffentlichungstag und Bekanntmachung des Hinweises auf die Patenterteilung: **04.03.1998**
(21) Anmeldenummer: 94112589.0
(22) Anmeldetag: 11.08.1994
(51) Int. Cl.: B60J 7/043

(54) **Einrichtung zum Schliessen oder wenigstens teilweisen Öffnen eines Deckels eines Hebe-Schiebedaches**
Closing or at least partially opening system for a cover of a tilting-sliding roof
Système de fermeture ou d'ouverture au moins partielle d'un couvercle pour toit basculant-coulissant

(30) Priorität: 11.08.1993 IT TO930609
(43) Veröffentlichungstag der Anmeldung: 15.02.1995
(73) Patentinhaber: WEBASTO KAROSSERIESYSTEME GmbH, D-82131 Stockdorf (DE)
(72) Erfinder: Benet, Giacomo Pastore, I-10040 Caselette (Torino) (IT)
(74) Vertreter: Wiese, Gerhard

(56) Entgegenhaltungen:
- EP-A- 0 220 976
- DE-C- 3 735 686
- PATENT ABSTRACTS OF JAPAN vol. 8, no. 90 (M-292) (1527) 25. April 1984 & JP-A-59 006 127 (HONDA) 13. Januar 1984

## Beschreibung

Die Erfindung betrifft eine Einrichtung zum Schließen oder wenigstens teilweisen Öffnen eines Deckels eines Hebe-Schiebedaches gemäß dem Oberbegriff des Patentanspruchs 1.

Ein beispielsweise aus der DE-C1-37 35 686 bekanntes Hebe-Schiebedach, das in der Fachwelt auch unter dem Begriff Spoiler-Dach bekannt ist, zeichnen sich dadurch aus, daß sein Deckel mit seiner Hinterkante zu Beginn der Öffnung über das feste Fahrzeugdach ausstellbar und anschließend in dieser ausgestellten Position nach hinten verschiebbar ist. Durch die erforderliche Verbindung des Deckels zu den beidseits einer Dachöffnung angeordneten Führungsschienen in seinem vorderen Drittel ist die maximale lichte Öffnungsweite bei diesem Dachtyp bislang auf etwa zwei Drittel der Deckellänge beschränkt.

Der Erfindung liegt die Aufgabe zugrunde, bei stabiler Führung des Deckels eine größere Öffnungsweite zu gestatten.

Diese Aufgabe wird gemäß der Erfindung durch die Merkmale des Patentanspruchs 1 gelöst. Durch das Vorsehen von wenigstens zwei Gleitelementen, die mittels Verriegelungsteilen zeitweise mit der Führungsschiene und zeitweise mit dem Antriebsschlitten koppelbar sind sowie durch das Vorsehen eines an einem der Gleitelemente angelenkten Führungsorganes für eine verschiebbare Führung des Deckels wird trotz großer Öffnungsweite eine stabile Abstützung des Deckels bei vollständig geöffnetem Zustand gewährleistet. Vorteilhafte Ausgestaltungen der Erfindung sind den Unteransprüchen zu entnehmen.

Gemäß einer vorteilhaften Ausgestaltung sind die Gleitelemente bei geschlossenem Deckel einander benachbart im vorderen Teil der Führungsschiene angeordnet. Hierdurch ergibt sich eine kompakte Bauweise der miteinander koppelbaren Bauelemente.

Gemäß einer vorteilhaften Weiterbildung ist der Deckel nahe seiner Vorderkante mit einem der Gleitelemente schwenkbar verbunden. Vorzugsweise ist diese Verbindung so ausgelegt, daß zwischen dem Deckel und dem Gleitelement ein Hebel angeordnet ist. Durch diese Anordnung wird ermöglicht, daß der Ausstellwinkel des Deckels bei einer weiteren Verschiebung nach hinten gegenüber dem anfänglichen Ausstellwinkel verkleinert werden kann. Dies wirkt sich insgesamt vorteilhaft auf die Aerodynamik des Fahrzeugs bei geöffnetem Deckel aus.

Gemäß einer besonders vorteilhaften Ausgestaltung ist vorgesehen, daß zwei in Schließposition des Deckels vorn liegende Gleitelemente während eines Teils der Verschiebebewegung des Deckels mittels eines Riegelelementes miteinander sowie zusätzlich mit dem Antriebsschlitten gekoppelt sind. Vorteilhaft erfolgt vor Beendigung der Verschiebebewegung des Deckels in Öffnungsrichtung eine Entkoppelung dieser Gleitelemente mit einer anschließenden Verriegelung des einen Gleitelements mit der Führungsschiene. An dem dabei verriegelten Gleitelement ist das Führungsorgan für den Deckel angelenkt, sodaß sich bei dessen weiterer Verschiebung nach hinten eine vergrößerte Abstützweite für den Deckel ergibt.

Gemäß einer weiteren vorteilhaften Ausgestaltung ist vorgesehen, daß der Ausstellhebel über einen Stift mit einer dachfesten Kulisse in Eingriff steht. Besonders vorteilhaft ist der Ausstellhebel mit seinem unteren Ende an ein zu Anfang der Verschiebebewegung des Deckels in Öffnungsrichtung mit dem Antriebsschlitten koppelbares Gleitelement angelenkt und mit seinem oberen Ende schwenkbar und längsverschiebbar am Führungsorgan befestigt.

Bei einer besonders bevorzugten Ausführungsform der Erfindung verfügt die Einrichtung über drei Gleitelemente, von denen das hintere Gleitelement mit dem unteren Ende des Ausstellhebels verbunden ist und über ein Verriegelungsteil während der Ausstellbewegung des Deckels mit einer Aussparung am Antriebsschlitten und während der letzten Phasen der Verschiebebewegung des Deckels mit einer Aussparung der Führungsschiene im Eingriff steht. Ein erstes vorderes Gleitelement, an dem ein Führungsorgan für den Deckel angelenkt ist, und ein zweites vorderes Gleitelement stehen während der Ausstellbewegung des Deckels mittels eines an einem der Gleitelemente angeordneten Riegelelementes mit einer Aussparung der Führungsschiene im Eingriff und ferner während dieser Ausstellphase und einem ersten Teil der Verschiebebewegung des Deckels mittels eines Riegelelementes miteinander in Eingriff. Gleichzeitig stehen beide Gleitelemente über ein weiteres Riegelelement mit dem Antriebsschlitten in Verbindung. Während der letzten Phase der Verschiebebewegung des Deckels wird das erste vordere Gleitelement vom zweiten Gleitelement abgekoppelt und gleichzeitig mittels des Riegelelementes mit einer Aussparung der Führungsschiene verriegelt, wobei das mit einem deckelfesten Teil gekoppelte zweite Gleitelement bis in die vollständige Öffnungsposition hinein mit dem Antriebsschlitten gekoppelt bleibt.

Nachfolgend ist ein Ausführungsbeispiel der Erfindung anhand der Zeichnung beschrieben. Es zeigt:
- Fig. 1: eine Draufsicht einer erfindungsgemaßen Einrichtung, wie sie zu beiden Seiten einer Dachöffnung in einem Fahrzeugdach verwendet wird, in Schließposition,
- Fig. 2: eine Seitenansicht der Einrichtung gemäß Pfeil A der Figur 1,
- Fig. 3: einen Längsschnitt gemäß der Linie III-III der Fig. 1,
- Fig. 4: eine Draufsicht auf die Einrichtung in einer ersten Öffnungsphase,
- Fig. 5: eine Seitenansicht der Einrichtung gemäß dem Pfeil B der Fig. 4,
- Fig. 6: einen Teillängsschnitt durch die Einrichtung gemäß der Linie VI-VI in Fig. 4,
- Fig. 7 + 8: eine Draufsicht und eine Seitenansicht der Einrichtung in einer auf die Fig. 4 folgenden Öffnungsphase,
- Fig. 9 + 10: eine Draufsicht und eine Seitenansicht der Einrichtung in der vollständigen Öffnungsposition und
- Fig. 11: einen Querschnitt gemäß der Linie C-C in den Fig. 2 und 3.

Aus Vereinfachungsgründen wird nachstehend nur auf eine von zwei erfindungsgemäßen Einrichtungen Bezug genommen, welche symmetrisch auf gegenüberliegenden Seiten eines öffnungsfähigen Fahrzeugdaches bzw. eines Deckels 27 angeordnet sind.

Die Einrichtung ist an einem Paar paralleler Führungsschienen 1 angeordnet, welche am Dach eines Fahrzeuges befestigt sind. In der Führungsschiene 1 ist ein Gleitelement 2 verschiebbar gelagert, dessen hinteres Ende beim Gelenkbolzen 35 an das eine Ende eines Ausstellhebels 3 angelenkt ist. Der Ausstellhebel 3 ist mit seinem anderen Ende beim Gelenkbolzen 36 an eine Stange 10 angelenkt, welche verschiebbar in einer Führungsbahn 24 einer oberen Führung 8 gelagert ist, welche an der Unterseite eines Deckels 27 befestigt ist.

Zwischen den Anlenkpunkten 35 bzw. 36 des Ausstellhebels 3 ist ein querverlaufender Stift 22 angeordnet, der vorzugsweise einstückig mit dem Ausstellhebel 3 ausgebildet ist. Der Stift 22 ist verschiebbar in einer Kulissenbahn 23 gelagert, die in einer mit der Führungsschiene 1 fest verbundenen Kulisse 4 vorgesehen ist. Die Führungsbahn 23 weist einen ersten ansteigend geneigten Abschnitt 23a und einen zweiten abfallend geneigten Abschnitt 23b auf.

Das vordere Ende der Stange 10 ist schwenkbar beim Gelenkbolzen 37 an ein erstes vorderes Gleitelement 9 angelenkt, welches ebenfalls innerhalb der Führungsschiene 1 verschiebbar ist und welches von einem zweiten vorderen Gleitelement 5 flankiert wird. Das zweite Gleitelement 5 ist ebenfalls verschiebbar in der Führungsschiene 1 gelagert. Es ist ferner mittels eines Hebels 6 an einem Gestänge 7 angelenkt, welches mit der deckelfesten oberen Führung 8 verbunden ist.

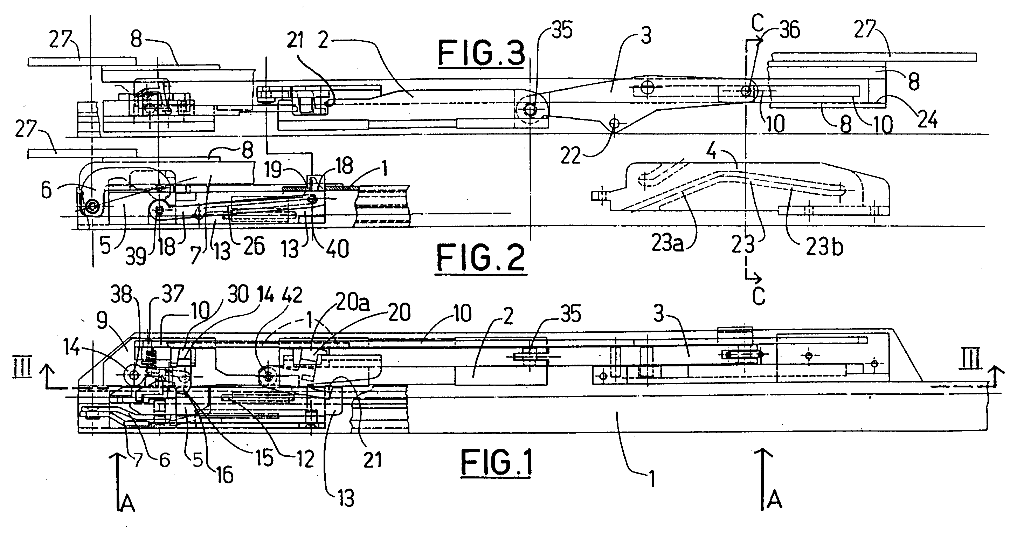

In der Schließposition gemäß den Fig. 1 - 3 sind die Gleitelemente 5 und 9 mittels eines T-förmigen Riegelelementes 14 miteinander verbunden. Das Riegelelement 14 ist schwenkbar um einen Gelenkbolzen 38 am vorderen Gleitelement 9 gelagert und greift mit seinem unteren Ende 15 in eine entsprechende Aussparung 16 am zweiten vorderen Gleitelement 5 ein. Das obere Ende 30 des Riegelelementes 14 liegt in gleitendem Kontakt an einer Wand der Führungsschiene 1 an.

Entsprechend Fig. 2 sind die vorderen Gleitelemente 5 und 9 in dieser Position mit der Führungsschiene 1 über ein Riegelelement 18 verriegelt, welches ein erstes schwenkbar gelagertes Ende aufweist, das mit einem Gelenkbolzen 39 am Gleitelement 5 angelenkt ist, und welches ein zweites gegenüberliegendes Ende aufweist, das in eine Anssparung 19 in der Führungsschiene 1 eingreift. Das Riegelelement 18 ist ferner mit einem Bolzen 40 versehen, der in einen geneigten Schlitz 26 an einem Antriebsschlitten 13 eingreift. Der Antriebsschlitten 13 wird auf herkömmliche Art mittels eines flexiblen Spiralkabels 12 bewegt, das entweder manuell oder elektrisch antreibbar ist.

Bei Bewegung des Antriebsschlitten 13 längs der Führungsschienen 1 treibt dieser die anderen Teile der Einrichtung an und verursacht deren Eingriff bzw. Entkoppelung während der Verschiebebewegung des Deckels 27, wie nachfolgend im Detail beschrieben wird.

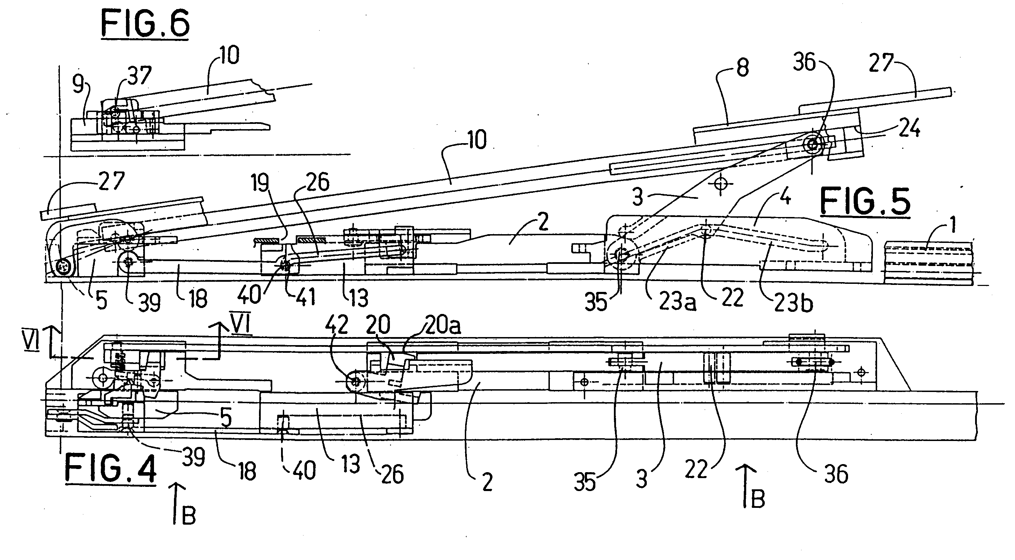

Eine Bewegung des Antriebskabels 12 bewirkt eine Bewegung des Anstriebsschlittens 13. Der Antriebsschlitten 13 ist mit dem Gleitelement 2 durch ein Riegelelement 20 (Fig. 1 und 4) verbunden, welches um eine Schwenkachse 42 schwenkbar am Gleitelement 2 gelagert ist und in eine Aussparung 21 am Antriebsschlitten 13 eingreift. Wenn der Antriebsschlitten 13 sich nach rechts bewegt, nimmt er das Riegelelement 20 und entsprechend das Gleitelement 2 mit sich. Währenddessen wird eine obere Zunge 20a des Riegelelementes 20 in gleitendem Kontakt gegen eine Wand der Führungsschiene 1 gehalten, da die am Antriebsschlitten 13 angreifende Kraft exzentrisch bezüglich der Schwenkachse 42 des Riegelelementes 20 verläuft.

Während dieser Phase bewegt der Antriebsschlitten 13 das Gleitelement 2, welches den Ausstellhebel 3 betätigt. Der Stift 22 des Ausstellhebels 3 gleitet entlang des geneigten Abschnitts 23a der Kulissenbahn 23 und erzwingt dadurch eine Ausstellbewegung des Ausstellhebels 3, wodurch sich die Stange 10 und die obere Führung 8, welche die Stange 10 umgibt, anheben. Im Ergebnis wird der Deckel 27 ausgestellt (Fig. 4 + 5).

Wenn der Stift 22 nahe an den Punkt seiner maximalen Erhebung gelangt ist, gerät der am Antriebsschlitten 13 angeordnete Bolzen 40 am linken Ende des geneigten Schlitzes 26 (Fig. 5) mit einer Verzahnung 41 in Eingriff, die als vertikaler Abschnitt des Schlitzes 26 ausgebildet ist. Dementsprechend werden die Gleitelemente 5 und 9 an den Antriebsschlitten 13 angekoppelt. Gleichzeitig gerät in dieser Position das Riegelelement 18 außer Eingriff mit der Aussparung 19, wodurch die Gleitelemente 5 und 9 nicht länger mit der Führungsschiene 1 verriegelt sind, sondern der Antriebskraft des Antriebsschlitten 13 folgend mit dem Gleitelement 2 gleichzeitig verschiebbar sind.

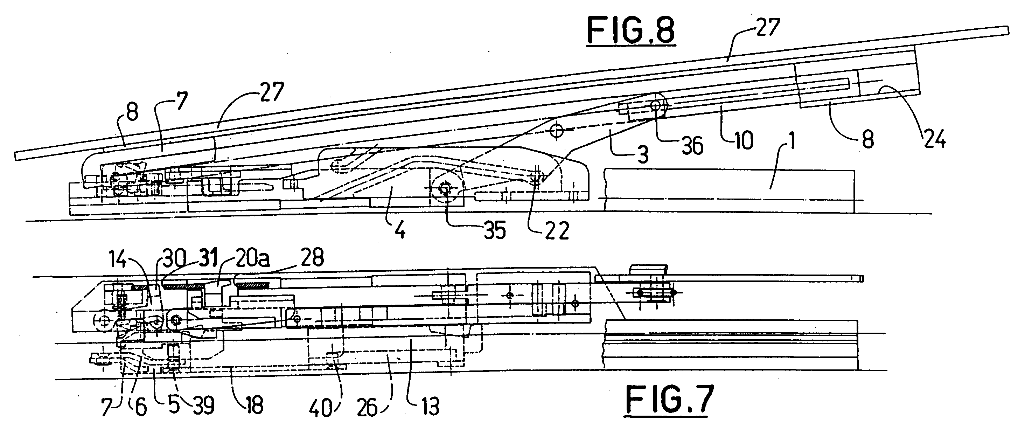

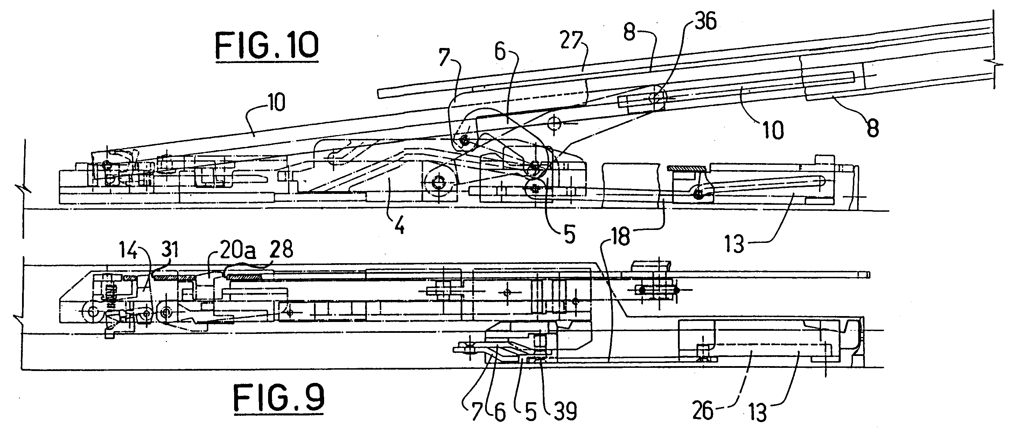

Mit fortschreitender Öffnungsbewegung senkt sich das obere Ende des Ausstellhebels 3 leicht ab, während der Stift 22 den nach unten geneigten Abschnitt 23b der Kulissenbahn 23 durchläuft. Gleichzeitig bewegen sich die Gleitelemente 5 und 9 weiter nach hinten und der Deckel 27 wird weiter in Öffnungsrichtung betätigt. Wenn der Stift 22 das Ende der Kulissenbahn 23 erreicht (Fign. 7 + 8), gerät das Riegelelement 20, das bislang das Gleitelement 2 mit dem Antriebsschlitten 13 gekoppelt hat, in Eingriff mit einer Aussparung 28 der Führungsschiene und kommt dadurch von der Aussparung 21 am Antriebsschlitten 13 außer Eingriff. Dadurch bleiben ab diesem Zeitpunkt das Gleitelement 2 mit dem Ausstellhebel 3 und der festen Kulisse 4 in einer verriegelten Position, während gleichzeitig der Antriebsschlitten 13 weiter nach hinten fährt und dabei die beiden vorderen Gleitelemente 5 und 9 und die obere Führung 8 solange mit nach hinten nimmt, bis der Gelenkbolzen 36 am Ausstellhebel 3 innerhalb der Führungsbahn 24 seinen Endhub erreicht hat. In diesem Augenblick gerät das obere Ende 30 des Riegelelementes 14 mit einer Aussparung 31 in der Führungsschiene 1 in Eingriff, so daß es das Gleitelement 9 mit der Führungsschiene 1 verriegelt und gleichzeitig das Gleitelement 5 aus der gemeinsamen Verriegelung freigibt. Das Gleitelement 5 ist daher ab diesem Augenblick das einzige, welches sich mit dem Antriebsschlitten 13 weiter nach hinten bewegt. Nachdem alle anderen Teile in einer stationären Position verriegelt sind (Fign. 9 + 10), wird durch den Hebel 6 und das Gestänge 7 durch die weitere nach hinten gerichtete Bewegung des Gleitelementes 5 die obere Führung 8 des Deckels 27 teleskopartig längs der als Führungsorgan wirkenden Stange 10 bewegt. Dadurch bewegt sich der Deckel 27 solange weiter in Öffnungsrichtung, bis das Gleitelement 5 einen vorbestimmten Rastpunkt an der Führungsschiene 1 erreicht. Wie in den Fign. 9 und 10 zu erkennen ist, vergrößert sich der zwischen Hebel 6 und Gestänge 7 gebildete Winkel während der Bewegung des Gleitelementes nach rechts, wodurch gleichzeitig das rechte Ende der oberen Führung 8 längs der geneigten Stange 10 eine flachere Verschiebebewegung durchführt. Der Deckel 27 hat dadurch in vollständig geöffneter Position eine flachere Neigung als zu Beginn seiner Verschiebebewegung.

Bei der Schließbewegung des Deckels 27 arbeiten alle beteiligten Organe umgekehrt zu der gerade vorstehend beschriebenen Öffnungsbewegung.

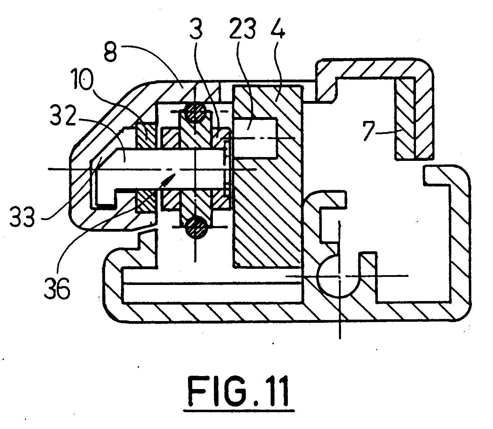

Um eine saubere Gleitbewegung der Stange 10 und der oberen Führung 8 zu erreichen, ist letztere mit einer Nut 33 (Fig. 11) versehen, die eine Gleitbewegung eines darin angeordneten Gleitschuhes 32 ermöglicht, der mit der Stange 10 verbunden ist.

In der vollständig geöffneten Position (Fig. 10) wird der am weitesten vorne liegende Abstützpunkt des Deckels 27 vom vorderen Gleitelement 9 und der am weitesten hinten liegende Stützpunkt vom Bolzen 36 am Hebel 3 gebildet. Dies verdeutlicht, daß aufgrund des großen Abstandes dieser beiden Stützpunkte eine hinreichend stabile Lagerung des Deckels auch bei einer gegenüber bisher bekannten Spoiler-Dächern wesentlich vergrößerten Dachöffnung ermöglicht wird.

### Bezugszeichenliste

- 1: Führungsschiene
- 2: Gleitelement
- 3: Ausstellhebel
- 4: Kulisse (an 1)
- 5: (zweites) Gleitelement
- 6: Hebel (zwischen 5 und 7)
- 7: Gestänge (an 8)
- 8: Führung (am Deckel 27)
- 9: (erstes) Gleitelement (vorderstes)
- 10: Stange
- 12: Antriebskabel
- 13: Antriebsschlitten
- 14: Riegelelement (zwischen 5 und 9)
- 15: unteres Ende (von 14)
- 16: Aussparung (an 5)
- 18: Riegelelement
- 19: Aussparung (in 1)
- 20: Riegelelement
- 20A: obere Zunge (von 20)
- 21: Aussparung (an 13)
- 22: Stift (an 3)
- 23: Kulissenbahn
- 23a, b: Kulissenbahn-Abschnitte
- 24: Führungsbahn (an 8)
- 26: Schlitz (an 13)
- 27: Deckel
- 28: Öffnung (in 1)
- 30: oberes Ende (von 14)
- 31: Aussparung (in 1)
- 32: Gleitschuh (an 10)
- 33: Nut (in 8)
- 35: Gelenkbolzen (zwischen 2 und 3)
- 36: Gelenkbolzen (zwischen 3 und 10)
- 37: Gelenkbolzen (zwischen 9 und 10)
- 38: Gelenkbolzen (für Riegelelement 14)
- 39: Gelenkbolzen (für Riegelelement 18)
- 40: Bolzen (an 18)
- 41: Verzahnung (an 26)
- 42: Schwenkachse (von 20)

## Patentansprüche

1. Einrichtung zum Schließen oder wenigstens teilweisen Öffnen eines Deckels (27) eines Hebe-Schiebedaches
- mit einem Antriebsschlitten (13), der verschiebbar an dachfesten Führungsschienen (1) gelagert ist, der mit einem Ausstellhebel (3) zum Anheben oder Absenken des Deckels (27) in Verbindung steht und der mit Betätigungsmitteln (12) verbunden ist, **dadurch gekennzeichnet**,
- daß die Einrichtung wenigstens zwei Gleitelemente (2,5,9) umfaßt, die verschiebbar in den Führungsschienen (1) geführt sind und von denen wenigstens zwei Gleitelemente (2,5,9) mit Verriegelungsteilen (20,20A; 14,15,30; 18) zur Herstellung einer zeitweisen Verriegelung mit Aussparungen (28,31,19) an der Führungsschiene (1) oder zur zumindestens mittelbaren Verriegelung mit dem Antriebsschlitten (13) versehen sind und
- daß an einem der Gleitelemente (9) ein Führungsorgan (Stange 10) angelenkt ist, an dem der Deckel (27) verschiebbar geführt ist.

2. Einrichtung nach Anspruch 1, **dadurch gekennzeichnet**, daß die Gleitelemente (2,5,9) bei geschlossenem Deckel (27) einander benachbart im vorderen Teil der Führungsschienen (1) angeordnet sind.

3. Einrichtung nach einem der vorhergehenden Ansprüche, **dadurch gekennzeichnet**, daß der Deckel (27) nahe seiner Vorderkante mit einem der Gleitelemente (5) schwenkbar verbunden ist.

4. Einrichtung nach Anspruch 3, **dadurch gekennzeichnet**, daß die Verbindung zwischen dem Deckel (27) und dem Gleitelement (5) mittels eines Hebels (6) erfolgt.

5. Einrichtung nach einem der vorhergehenden Ansprüche, **dadurch gekennzeichnet**, daß zwei in Schließposition des Deckels (27) vorn liegende Gleitelemente (5,9) während eines Teils der Verschiebebewegung des Deckels mittels eines Riegelelements (20) miteinander sowie zusätzlich mit dem Antriebsschlitten (13) gekoppelt sind.

6. Einrichtung nach Anspruch 5, **dadurch gekennzeichnet**, daß vor Beendigung der Verschiebebewegung des Deckels (27) in Öffnungsrichtung eine Entkoppelung der Gleitelemente (5,9) erfolgt mit einer anschließenden Verriegelung des einen Gleitelements (9) mit der Führungsschiene.

7. Einrichtung nach einem der vorhergehenden Ansprüche, **dadurch gekennzeichnet**, daß der Ausstellhebel (3) über einen Stift (22) mit einer dachfesten Kulisse (4) in Eingriff steht.

8. Einrichtung nach Anspruch 7, **dadurch gekennzeichnet**, daß der Ausstellhebel (3) mit seinem unteren Ende (35) an ein zu Anfang der Verschiebebewegung des Deckels (27) in Öffnungsrichtung mit dem Antriebsschlitten (13) koppelbares Gleitelement (2) angelenkt ist und mit seinem oberen Ende (36) schwenkbar und längsverschiebbar am Führungsorgan (10) befestigt ist.

9. Einrichtung gemäß wenigstens einem der vorhergehenden Ansprüche,
**dadurch gekennzeichnet**, daß die Einrichtung drei Gleitelemente (2, 5, 9) umfaßt, von denen
- ein hinteres Gleitelement (2) mit dem unteren Ende des Ausstellhebels (3) verbunden ist und über ein Verriegelungsteil (20) während der Ausstellbewegung des Deckels (27) mit einer Aussparung (21) am Antriebsschlitten (13) und während der letzten Phasen der Verschiebebewegung des Deckels (27) mit einer Aussparung (28) der Führungsschiene (1) im Eingriff steht,
- ein erstes vorderes Gleitelement (9), an dem ein Führungsorgan (10) für den Deckel (27) angelenkt ist, und ein zweites vorderes Gleitelement (5) während der Ausstellbewegung des Deckels (27) mittels eines an einem der Gleitelemente (5) angeordneten Riegelelements (18) mit einer Aussparung (19) der Führungsschiene (1) im Eingriff stehen, ferner während dieser Ausstellphase und einem ersten Teil der Verschiebebewegung des Deckels (27) mittels eines Riegelelements (14) miteinander gekoppelt sind, sowie mit einem weiteren Riegelelement (40) mit dem Antriebsschlitten (13) in Verbindung stehen,
- das erste vordere Gleitelement (9) während der letzten Phase der Verschiebebewegung des Deckels (27) vom zweiten vorderen Gleitelement (5) abgekoppelt und gleichzeitig mittels des Riegelelements (14) mit einer Aussparung (31) der Führungsschiene (1) verriegelt wird, wobei das mit einem deckelfesten Teil (7) gekoppelte zweite Gleitelement (5) mit dem Antriebsschlitten (13) gekoppelt bleibt.

## Claims

1. A system for closing or at least partially opening a cover (27) of a tilting-sliding roof
- with a drive slide (13) displaceably mounted on guide rails (1) fixed to the roof and which is connected to a push-out lever (3) for raising or lowering the cover (27) and which is connected to actuating means, characterised in that
- the system comprises at least two sliding elements (2,5,9) displaceably guided in the guide rails (1) and of which at least two sliding elements (2,5,9) are provided with interlocking parts (20,20A; 14,15,30; 18) for establishing a temporary interlock with recesses (28,31,19) on the guide rail (1) or an at least indirect interlock with the drive slide (13) and
- in that articulated on one of the sliding elements (9) is a guide member (rod 10) on which the cover (27) is displaceably guided.

2. A system according to Claim 1, characterised in that when the cover (27) is closed, the sliding elements (2,5,9) are disposed closely adjacent one another in the front part of the guide rails (1).

3. A system according to one of the preceding Claims, characterised in that the cover (27) is, close to its front edge, pivotally connected to one of the sliding elements (5).

4. A system according to Claim 3, characterised in that the connection between the cover (27) and the sliding element (5) is established by means of a lever (6).

5. A system according to one of the preceding Claims, characterised in that two sliding elements (5,9) which are at the front in the closed position at the cover (27) are during a part of the displacement movement of the cover coupled to each other by means of a bolt element (20) and additionally to the drive slide (13).

6. A system according to Claim 5, characterised in that prior to termination of the displacement movement of the cover (27) in the opening direction, there is a decoupling of the sliding elements (5,9) with a subsequent interlocking of one sliding element (9) together with the guide rail.

7. A system according to one of the preceding Claims, characterised in that the push-out lever (3) engages a connecting link (4), fixed to the roof, by means of a pin (22).

8. A system according to Claim 7, characterised in that the push-out lever (3) has its bottom end (35) articulated on a sliding element (2) which at the start of the displacement movement of the cover (27) in the opening direction, is adapted to be coupled to the drive slide (13) while its upper end (36) is pivotally and longitudinally displaceably fixed to the guide member (10).

9. A system according to at least one of the preceding Claims, characterised in that the system comprises three sliding elements (2,5,9) of which
- one rear sliding element (2) is connected to the bottom end of the push-out lever (3) and, via an interlocking part (20) and during the pushing out movement of the cover (27), engages a recess (21) on the drive slide (13) and during the final phases of the displacement movement of the cover (27), engages a recess (28) on the guide rail (1),
- a first front sliding element (9), on which a guide member (10) for the cover (27) is articulated, and a second front sliding element (5) are, during the pushing out movement of the cover (27), and by means of a bolt element (18) disposed on one of the sliding elements (5), engaged in a recess (19) on the guide rail (1), furthermore, during this pushing out phase and a first part of the displacement movement of the cover (27), are coupled to one another by means of a bolt element (14) and to a further bolt element (40) with the drive slide (13),
- the first front sliding element (9) is, during the final phase of the displacement movement of the cover (27), disengaged from the second, front sliding element (5) and is at the same time locked by means of the bolt element (14) to a recess (31) in the guide rail (1), the second sliding element (5) which is coupled to a part (7) fixed to the roof remains coupled to the drive slide (13).

## Revendications

1. Installation pour fermer ou au moins ouvrir partiellement un panneau (27) d'un toit coulissant et relevable, comprenant,
- un chariot d'entraînement (13) monté coulissant dans des rails de guidage (1) portés par le pavillon, et qui coopèrent avec un bras de débattement (3) pour relever ou abaisser le panneau (27) et des moyens d'actionnement (12),
caractérisée en ce que
l'installation comprend au moins deux éléments glissants (2, 5, 9) guidés en coulissement dans les rails de guidage (1) et dont au moins deux éléments coulissants (2, 5, 9) sont munis de pièces de verrouillage (20, 20A ; 14, 15, 30 ; 18) pour réaliser un verrouillage provisoire avec les cavités (28, 31, 19) des rails de guidage (1) ou au moins un verrouillage indirect avec le chariot d'entraînement (13) et,
- l'un des éléments coulissants (9) comporte un organe de guidage (tige 10) articulé sur lequel le panneau (27) est guidé en coulissement.

2. Installation selon la revendication 1,
caractérisée en ce que
les éléments coulissants (2, 5, 9) sont prévus au voisinage dans la partie avant des rails de guidage (1) lorsque le panneau (27) est fermé.

3. Installation selon l'une des revendications précédentes,
caractérisée en ce que
le panneau (27) est relié à proximité de son arête avant de manière pivotante avec l'un des éléments coulissants (5).

4. Installation selon la revendication 3,
caractérisée en ce que
la liaison entre le panneau (27) et l'élément coulissant (5) se fait par l'intermédiaire d'un levier (6).

5. Installation selon l'une des revendications précédentes,
caractérisée en ce que
deux éléments coulissants (5, 9) situés à l'avant lorsque le panneau (27) est en position de fermeture, sont couplés pendant une partie du mouvement de coulissement du panneau par l'intermédiaire d'un élément de verrouillage (20) ainsi qu'en outre avec les chariots d'entraînement (13).

6. Installation selon la revendication 5,
caractérisée en ce qu'
avant la fin du mouvement de coulissement du panneau (27), dans le sens de l'ouverture, il y a découplage des éléments coulissants (5, 9) et verrouillage consécutif de l'un des éléments (9) avec le rail de guidage.

7. Installation selon l'une des revendications précédentes,
caractérisée en ce que
le bras de débattement (3) est en prise avec une coulisse (4) solidaire du pavillon (toit) par l/intermédiaire d'une broche (22).

8. Installation selon la revendication 7,
caractérisée en ce que
le bras de débattement (3) est relié par son extrémité inférieure (35) à un élément coulissant (2) susceptible d'être couplé au rail d'entraînement (13) au début du mouvement de coulissement du panneau (27) dans le sens de l'ouverture et son extrémité supérieure (36) est fixée de manière pivotante et coulissante longitudinalement sur l'organe de guidage (10).

9. Installation selon au moins l'une des revendications précédentes,
caractérisée en ce qu'
elle comprend trois éléments coulissants (2, 5, 9) parmi lesquels :
- un élément coulissant arrière (2) est relié à l'extrémité inférieure du bras de débattement (3) et est en prise par l'intermédiaire d'une pièce de verrouillage (20) au cours du mouvement de débattement du panneau (27) avec une cavité (21) du chariot d'entraînement (13) et pendant la dernière phase du mouvement de coulissement du panneau (27), cet élément est en prise avec une cavité (28) du rail de guidage (1),
- un premier élément coulissant avant (9) sur lequel est articulé un organe de guidage (10) pour le panneau (27) et un second organe coulissant (5) sont en prise pendant le mouvement de débattement du panneau (27) par l'intermédiaire d'un élément de verrouillage (18) prévu sur l'un des éléments coulissants (5) avec une cavité (19) du rail de guidage (1) alors que pendant cette phase de débattement et pendant une première partie du mouvement de coulissement du panneau (27), ils sont couplés par un élément de verrouillage (14) ainsi qu'un autre élément de verrouillage (40) avec lequel coopère le chariot d'entraînement (13,
- le premier élément coulissant avant (9), pendant la dernière phase du mouvement de coulissement du panneau (27) est découplé du second élément coulissant avant (5) et est verrouillé en même temps par l'élément de verrouillage (14) à une cavité (31) du rail de guidage (1), le second élément coulissant (5) couplé à une partie (7) solidaire du panneau, restant couplé au rail d'entraînement (13).
